# EUROPÄISCHE PATENTSCHRIFT

(11) **EP 2 675 674 B1**
(45) Veröffentlichungstag und Bekanntmachung des Hinweises auf die Patenterteilung: **29.05.2019**
(21) Anmeldenummer: 12704275.2
(22) Anmeldetag: 15.02.2012
(51) Int. Cl.: B60T 13/66, B60T 13/68, B60T 17/00, B60T 17/02, B60T 17/22, B60T 17/04

(54) **DRUCKLUFTVERSORGUNGSEINRICHTUNG FÜR NUTZFAHRZEUGE**
COMPRESSED AIR SUPPLY DEVICE FOR COMMERCIAL VEHICLES
DISPOSITIF D'ALIMENTATION EN AIR COMPRIMÉ POUR VÉHICULES UTILITAIRES

(30) Priorität: 17.02.2011 DE 102011011628
(43) Veröffentlichungstag der Anmeldung: 25.12.2013
(73) Patentinhaber: KNORR-BREMSE Systeme für Nutzfahrzeuge GmbH, 80809 München (DE)
(72) Erfinder: LEINUNG, Andreas, 81245 München (DE)
(86) Internationale Anmeldenummer: PCT/EP2012/052577
(87) Internationale Veröffentlichungsnummer: WO 2012/110552

(56) Entgegenhaltungen:
- EP-A1- 1 502 778
- EP-A2- 2 140 926
- DE-A1-102007 013 673

## Beschreibung

Bei modernen Nutzfahrzeugen werden häufig pneumatische Systeme wie Druckluftbremsen eingesetzt. Zur Versorgung derartiger pneumatischer Systeme mit Druckluft dienen Druckluftversorgungseinrichtungen, die inzwischen häufig eine elektronische Steuereinrichtung aufweisen. Um über die elektronische Steuereinrichtung Ventile der Druckluftversorgungseinrichtung gezielt ansteuern zu können, sind die Ventile häufig als Magnetventile ausgebildet. Somit lässt sich eine präzise Steuerung von über einen Kompressor bereitgestellter Druckluft und einer Regenerierung des Luftfilters erreichen. Um bei Ausfall der elektronischen Steuereinrichtung, beispielsweise durch eine fehlerhafte Stromversorgung oder wegen eines Sensorversagens, die Druckluftversorgung für so wichtige Systeme wie Bremsen sicherzustellen, wird in der Regel eine Rückfallebene bereitgestellt, die auch ohne elektronische Steuereinrichtung funktioniert. Allerdings entfällt dann auch die Möglichkeit gezielter Ansteuerung der Ventile. Beispielsweise lässt sich der Kompressor in der Regel nicht mehr ohne Weiteres in einen Energiesparzustand versetzen, wenn ein Betriebsdruck der Druckluftversorgungseinrichtung erreicht ist. Dies kann dazu führen, dass der Kompressor über lange Zeit gegen einen hohen Druck weiter arbeitet, bis ein Sicherheitsventil bei einem Maximaldruck den Druck abbläst. Dies kann zu einer erheblichen Belastung des Kompressors führen, die beispielsweise durch Überhitzung sogar den Kompressor beschädigen kann. Weiterhin kann eine nicht mehr durchführbare Regenerierung dazu führen, dass Luftfilter und Verbrauchersysteme wie Bremsen nass gefahren werden.

Es ist eine Aufgabe der vorliegenden Erfindung, bei einer elektronisch gesteuerten Druckluftversorgungseinrichtung eine Rückfallebene bereitzustellen, die rein pneumatisch eine verbesserte Steuerung der Druckluftversorgungseinrichtung und insbesondere eines Kompressors ermöglicht. Gattungsgemässe Druckluftversorgungseinrichtungen sind aus z.B. EP2140926 A2 und aus DE 102007013673 A1 bekannt.

Diese Aufgabe wird mit den Merkmalen des unabhängigen Anspruchs gelöst. Vorteilhafte Ausführungsformen der Erfindung sind in den abhängigen Ansprüchen angegeben.

Erfindungsgemäß ist eine Druckluftversorgungseinrichtung für Nutzfahrzeuge vorgesehen, die mit einer elektronischen Steuereinrichtung elektrisch verbunden oder verbindbar ist. Die Druckluftversorgungseinrichtung weist mindestens ein Steuerventil auf, das über die elektronische Steuereinrichtung ansteuerbar ist, wobei das Steuerventil mindestens einen Eingangsanschluss, einen Entlüftungsanschluss und einen Ausgangsanschluss aufweist. Eine Steuerleitung ist mit dem Ausgangsanschluss des Steuerventils verbunden, wobei die Steuerleitung mit einem Steuereingang eines Kompressors und/oder für eine Regenerierung mit einem Luftfilter verbunden oder verbindbar ist. Es ist eine Versorgungsleitung vorgesehen, über die Druckluft zu dem Eingangsanschluss des Steuerventils geführt oder führbar ist, sowie eine Entlüftungsleitung, die mit dem Entlüftungsanschluss des Steuerventils verbunden ist. Darüber hinaus ist ein Rückfallventil vorgesehen, wobei ein Eingang des Rückfallventils mit der Versorgungsleitung verbunden ist und ein Ausgang des Rückfallventils mit der Entlüftungsleitung verbunden oder verbindbar ist. Das Rückfallventil ist derart ausgebildet, dass es pneumatisch öffnet, wenn in der Versorgungsleitung ein Druck vorliegt, der einem vorbestimmten Öffnungsdruck entspricht oder diesen übersteigt. Somit kann über das Rückfallventil eine pneumatische Rückfallebene bereitgestellt werden, die auch bei ausgefallener elektronischer Steuereinrichtung über das offen geschaltete Rückfallventil, die Entlüftungsleitung und den Entlüftungsanschluss des Steuerventils einen Druckaufbau in der Steuerleitung ermöglicht. Somit kann über die Steuerleitung beispielsweise ein Kompressor derart angesteuert werden, dass er in einen Energiesparzustand geschaltet wird. Alternativ oder zusätzlich ist das Durchführen einer Regenerierung ohne funktionierende elektronische Steuereinrichtung möglich. Das Rückfallventil kann neben seinem Eingang und seinem Ausgang einen Entlüftungsausgang aufweisen, der mit einer Entlüftung zur Atmosphäre verbunden oder verbindbar sein kann. Pneumatisches Öffnen des Rückfallventils bedeutet, dass das Rückfallventil pneumatisch eine fluidleitende Verbindung zwischen seinem Eingang und seinem Ausgang herstellt. Dabei kann ein eventuell vorhandener Entlüftungsausgang des Rückfallventils abgesperrt sein. Pneumatisches Schließen des Rückfallventils bedeutet, dass das Rückfallventil eine Verbindung zwischen dem Ausgang des Rückfallventils und dem Eingang des Rückfallventils absperrt oder unterbricht. Dabei kann eine Verbindung zischen dem Ausgang und einem eventuell vorhandenen Entlüftungsausgang des Rückfallventils hergestellt werden. Das Rückfallventil kann über eine Normalstellung und eine Öffnungsstellung verfügen. Die Normalstellung kann der Stellung entsprechen, die das Rückfallventil einnimmt, wenn der Druck in der Versorgungsleitung nicht zum Öffnen des Rückfallventils ausreicht. In der Normalstellung kann die Verbindung zwischen einem Eingang und einem Ausgang des Rückfallventils abgesperrt sein. Sollte das Rückfallventil einen Entlüftungsanschluss aufweisen, kann in der Normalstellung eine Verbindung zwischen dem Ausgang des Rückfallventils und dem Entlüftungsausgang vorgesehen sein. In der Öffnungsstellung kann der Eingang des Rückfallventils mit dem Ausgang des Rückfallventils verbunden sein. Ein eventuell vorhandener Entlüftungsausgang des Rückfallventils kann abgesperrt sein. Das Rückfallventil kann derart ausgebildet sein, dass es durch ein pneumatisches Öffnen die Öffnungsstellung einnimmt, also dann aus der Normalstellung in die Öffnungsstellung übergeht, wenn der Öffnungsdruck in der Versorgungsleitung erreicht oder überschritten ist. Das Rückfallventil kann ein 3/2-Wegeventil sein. Dadurch können insbesondere Leckagen des Rückfallventils, die dazu führen, dass im Normalzustand Druckluft von der Versorgungsleitung zum Ausgang des Rückfallventils strömen kann, ausgeglichen werden. Insbesondere kann das 3/2-Wegeventil einen Eingang, einen Ausgang und einen Entlüftungsausgang aufweisen. In der Normalstellung kann vorzugsweise der Ausgang mit dem Entlüftungsausgang des 3/2-Wegeventils verbunden sein. Alternativ kann das Rückfallventil ein 2/2-Wegeventil sein. Dadurch kann eine besonders einfache und kostengünstige Konstruktion erreicht werden. Die Ansteuerung des Steuerventils durch die elektronische Steuereinrichtung kann indirekt oder direkt elektrisch erfolgen, beispielsweise durch Bestromung elektromagnetischer Komponenten des Ventils. Das Steuerventil kann insbesondere als Magnetventil ausgebildet sein. Es ist auch vorstellbar, dass das Steuerventil zusätzlich zu einem pneumatischen Ventil eine Magnetventilkomponente zur Vorsteuerung des pneumatischen Ventils aufweist, die durch die elektronische Steuereinrichtung angesteuert wird. Es ist vorstellbar, das Steuerventil als 3/2-Wegeventil auszubilden. Der Entlüftungsanschluss des Steuerventils kann über die Entlüftungsleitung mit einer Entlüftung zur Atmosphäre verbunden oder verbindbar sein. In einer Normalstellung kann das Steuerventil derart geschaltet sein, dass es die Steuerleitung mit der Entlüftungsleitung verbindet, also dass eine fluidleitende Verbindung zwischen dem Ausgangsanschluss und dem Entlüftungsanschluss besteht. Der Eingangsanschluss und somit die Versorgungsleitung können in der Normalstellung abgesperrt sein. Somit kann in der Normalstellung des Steuerventils die Steuerleitung entlüftet oder entlüftbar sein. In einer Durchlassstellung des Steuerventils kann das Steuerventil derart geschaltet sein, dass es die Steuerleitung fluidleitend mit der Versorgungsleitung verbindet und die Entlüftungsleitung absperrt. Somit sind der Eingangsanschluss und der Ausgangsanschluss fluidleitend miteinander verbunden und der Entlüftungsanschluss ist abgesperrt. Die elektronische Steuereinrichtung kann es vermögen, das Steuerventil zwischen der Normalstellung und der Durchlassstellung umzuschalten. Es kann zweckmäßig sein, das Steuerventil derart auszubilden, dass es die Normalstellung einnimmt, wenn es nicht über die elektronische Steuereinrichtung angesteuert ist und/oder nicht bestromt ist. Dazu kann beispielsweise eine Rückstelleinrichtung wie eine Federanordnung vorgesehen sein, welche das Steuerventil in die Normalstellung vorspannt. Die elektronische Steuereinrichtung kann als Teil der Druckluftversorgungseinrichtung angesehen werden oder separat davon ausgebildet sein. Die Druckluftversorgungseinrichtung kann einen Kompressor umfassen, oder als vom Kompressor separate oder als separierbare Einrichtung angesehen werden. Die Steuerleitung kann insbesondere mit einem Kompressorsteuereingang verbunden oder verbindbar sein, über den der Kompressor pneumatisch angesteuert werden kann. Es ist beispielsweise vorstellbar, dass der Kompressor dann, wenn auf seinem Steuereingang ein Druck anliegt, beispielsweise über die Steuerleitung, in einen Energiesparmodus schaltet. In einem Energiesparmodus kann der Kompressor beispielsweise von einem Antrieb oder einer Welle entkuppelt oder ausgeschaltet sein, oder seine Förderleistung kann stark verringert sein. Liegt kein Druck auf dem Steuereingang des Kompressors, kann der Kompressor derart betrieben sein, dass er Druckluft für die Druckluftversorgungseinrichtung liefert. Ein Luftfilter kann Teil der Druckluftversorgungsanlage sein. Eine Regenerierung des Luftfilters kann derart durchgeführt werden, dass Druckluft aus der Druckluftversorgungseinrichtung durch den Luftfilter zu einer Entlüftung zur Atmosphäre abgeblasen wird, um im Luftfilter angesammeltes Wasser und Verunreinigungen zu entfernen. Dabei kann die Steuerleitung beispielsweise mit einem Rückschlagventil für die Regenerierung oder mit einem weiteren Steuerventil verbunden sein, welches zur Steuerung oder Einleitung einer Regenerierung wirken kann. Im Rahmen dieser Beschreibung stellt eine Verbindung oder fluidleitende Verbindung zwischen zwei pneumatischen Komponenten oder einer Leitung und einer pneumatischen Komponente wie einem Ventil eine pneumatische Verbindung dar, über die Druckluft geführt werden kann. Ein Nutzfahrzeug kann insbesondere ein Lastkraftwagen oder ein mobiles Arbeitsgerät sein, wie beispielsweise ein Traktor. Auch ein Schienenfahrzeug kann als ein Nutzfahrzeug angesehen werden. Durch die elektronische Steuereinrichtung kann ein normaler Betriebsdruck der Druckluftversorgungseinrichtung vorgegeben und/oder überwacht sein. Beispielsweise kann die elektronische Steuereinrichtung dazu ausgebildet sein, bei Erreichen des Betriebsdrucks die Druckluftzufuhr zu stoppen, etwa indem der Kompressor in seinen Energiesparmodus geschaltet wird. Es kann vorgesehen sein, dass die elektronische Steuereinrichtung den Druck in der Druckluftversorgungseinrichtung an einer oder mehreren Stellen durch geeignete Sensoren erfasst, und bei Erreichen des gewünschten Betriebsdrucks den Kompressor abschaltet oder entkuppelt. Dazu kann beispielsweise die elektronische Steuereinrichtung das Steuerventil derart ansteuern, dass die Steuerleitung unter Druck gesetzt wird, um ein Drucksignal an den Kompressorsteuereingang zu legen. Ein Betriebsdruck kann beispielsweise bei etwa 12 oder 12,5 Bar liegen. Der Betriebsdruck kann insbesondere in der Versorgungsleitung gemessen werden. Häufig ist zur Absicherung der Druckluftversorgungseinrichtung ein maximaler Sicherungsdruck vorgesehen, den die Einrichtung auf keinen Fall überschreiten darf. Um ein Überschreiten dieses Sicherungsdruckes zu vermeiden, wird häufig ein Sicherheitsventil verwendet, das bei Überschreiten des Sicherungsdrucks ein Entlüften zur Atmosphäre vornimmt. Das dazu verwendete Sicherheitsventil wird kann auch als angesteuertes Ablassventil für eine Regenerierung verwendet, das eine Verbindung zur Atmosphäre öffnet. Zweckmäßigerweise liegt der Öffnungsdruck des Rückfallventils unterhalb dieses Sicherungsdruckes. Es ist auch vorstellbar, dass das herkömmliche Sicherungsventil durch das Rückfallventil ersetzt wird. Denn durch die Verwendung des Rückfallventils kann ein Überschreiten des Öffnungsdrucks in der Druckluftversorgungseinrichtung durch Abschalten des Kompressors und/oder Einleiten einer Regenerierung oder anderweitigen Ablassens von Druck zuverlässig verhindert werden. Somit kann der Öffnungsdruck beispielsweise als Sicherungsdruck angesehen werden.

Erfindungsgemäss hat die Druckluftversorgungseinrichtung ferner mindestens ein Entlüftungsventil mit einem Eingang, einem Ausgang und einem Luftablass aufweist. Der Eingang des Entlüftungsventils ist mit dem Ausgang des Rückfallventils verbunden oder verbindbar und der Ausgang des Entlüftungsventils ist mit dem Entlüftungsanschluss des Steuerventils verbunden oder verbindbar. Über das Entlüftungsventil kann schnell zwischen einem Belüften und Entlüften des Entlüftungsanschlusses des Steuerventils umgeschaltet werden. Es ist vorstellbar, dass mehr als ein Steuerventil jeweils über seinen Entlüftungsanschluss an den Ausgang des Entlüftungsventils angeschlossen ist und/oder dass jedem Steuerventil mindestens ein Entlüftungsventil zugeordnet ist. Der Ausgang des Entlüftungsventils kann über die Entlüftungsleitung mit dem Entlüftungsanschluss oder den Entlüftungsanschlüssen der Steuerventile verbunden oder verbindbar sein. Somit kann eine Verbindung zwischen dem Rückfallventil und dem Entlüftungsanschluss des Steuerventils über das Entlüftungsventil erreicht werden. Allgemein kann ein Ventil als ein Entlüftungsventil angesehen werden, das einen Eingang, einen Ausgang und einen Luftablass aufweist. Der Luftablass kann mit einer Entlüftung zur Atmosphäre verbunden oder verbindbar sein. Ein Entlüftungsventil kann als 3/2-Wegeventil ausgebildet sein. Es kann zweckmäßig sein, dass bei dem Entlüftungsventil dann, wenn der Eingang entlüftet ist, der Ausgang mit dem Luftablass verbunden ist und so ebenfalls entlüftet wird. Wenn der Eingang belüftet ist, kann das Entlüftungsventil den Ausgang mit dem Eingang verbinden und den Luftablass absperren, so dass eine fluidleitende Verbindung zwischen Eingang und Ausgang des Entlüftungsventils besteht. In dieser Stellung kann das Entlüftungsventil als geöffnet bezeichnet werden. Da am belüfteten Eingang ein Druck ansteht, wird somit eine mit dem Ausgang verbundene Leitung belüftet. Ein Entlüftungsventil kann insbesondere pneumatisch angesteuert oder ansteuerbar sein.

Die Druckluftversorgungseinrichtung kann ein über die elektronische Steuereinrichtung ansteuerbares zweites Steuerventil aufweisen, wobei ein Ausgangsanschluss des zweiten Steuerventils für eine Regenerierung mit dem Luftfilter verbunden oder verbindbar ist. Das andere Steuerventil kann über die Steuerleitung mit einem Steuereingang eines Kompressors verbunden oder verbindbar sein. Damit kann insbesondere bei geeigneter Schaltstellung des zweiten Steuerventils ein Luftstrom, der zur Regenerierung des Luftfilters vorgesehen ist, über den Ausgangsanschluss des zweiten Steuerventils geleitet werden. Eine Regenerierungsleitung, die zur Regenerierung des Luftfilters vorgesehen ist und die an den Ausgangsanschluss des zweiten Steuerventils angeschlossen ist, kann somit als dem zweiten Steuerventil zugeordnete zweite Steuerleitung angesehen werden. Das zweite Steuerventil kann analog zum oben beschriebenen Steuerventil ausgebildet sein und insbesondere einen Eingangsanschluss, einen Ausgangsanschluss und einen Entlüftungsanschluss aufweisen. Es kann als 3/2-Wegeventil ausgebildet sein. Das zweite Steuerventil kann ein Magnetventil sein. Ein Entlüftungsanschluss des zweiten Steuerventils kann mit einer zugeordneten zweiten Entlüftungsleitung verbunden sein. Diese zweite Entlüftungsleitung kann mit einer Entlüftung zur Atmosphäre verbunden oder verbindbar sein. Es ist vorstellbar, dass die zweite Entlüftungsleitung mit dem Ausgang des Rückfallventils verbunden oder verbindbar ist. Eine derartige Verbindung kann beispielsweise über ein zwischengeschaltetes Ventil erfolgen. Das zwischengeschaltete Ventil kann das oben erwähnte Entlüftungsventil sein. Allgemein kann der Ausgang des Rückfallventils über ein Entlüftungsventil mit dem Entlüftungsausgang des ersten Steuerventils und/oder dem Entlüftungsausgang des zweiten Steuerventils verbunden oder verbindbar sein. Es kann beispielsweise ein Verbindungsknoten vorgesehen sein, welcher die mit dem Steuerventil verbundene Entlüftungsleitung mit der mit dem zweiten Steuerventil verbundenen zweiten Entlüftungsleitung verbindet und beide zum Entlüftungsventil führt.

Bei einer Weiterbildung kann ein Entlüftungsanschluss des zweiten Steuerventils mit einem Ausgang eines zweiten Entlüftungsventils verbunden sein, beispielsweise über eine zugeordnete zweite Entlüftungsleitung. Über das zweite Entlüftungsventil kann somit eine schnelle und kontrollierte Entlüftung des zweiten Steuerventils erfolgen.

Es ist vorstellbar, dass der Ausgang des Rückfallventils mit einem Eingang eines zweiten Entlüftungsventils verbunden ist. Über das zweite Entlüftungsventil ist beispielsweise die Ansteuerung oder Druckluftversorgung eines zweiten Steuerventils möglich. Somit kann das Rückfallventil über das zweite Entlüftungsventil auch ein zweites Steuerventil derart mit Druckluft versorgen, dass der Ausgangsanschluss des Steuerventils bei geöffnetem Rückfallventil unter Druck steht, wodurch beispielsweise eine Regenerierung der Druckluftversorgungsanlage unabhängig von der elektronischen Steuereinrichtung ermöglicht wird.

Zwischen dem Ausgang des Rückfallventils und dem Eingang des mindestens einen Entlüftungsventils kann eine Umgehungsleitung vorgesehen sein, welche mit einer Entlüftung verbunden ist. Somit kann ein unerwünschter Druckaufbau vor dem Eingang des Entlüftungsventils verhindert werden. Der Eingang des Entlüftungsventils kann über die Umgehungsleitung insbesondere mit einer Entlüftung zur Atmosphäre verbunden sein. Für den Fall, dass mehr als ein Entlüftungsventil vorgesehen ist, kann die Umgehungsleitung derart angeordnet sein, dass sie mit den Eingängen aller Entlüftungsventile verbunden ist. Wenn kein separates Entlüftungsventil vorhanden ist, kann trotzdem der Ausgang des Rückfallventils über eine entsprechende Umgehungsleitung mit einer Entlüftung zur Atmosphäre verbunden sein. Somit kann beispielsweise ein unerwünschter Druckaufbau in einer Entlüftungsleitung zu einem Steuerventil vermieden werden.

Bei einer Weiterbildung kann in der Umgehungsleitung eine Drossel vorgesehen sein. Dadurch kann einerseits ein unerwünschter Druckaufbau beispielsweise durch Leckage im Rückfallventil verhindert werden, andererseits kann ein erwünschter Druckaufbau vor dem Eingang eines Entlüftungsventils oder in einer Entlüftungsleitung erfolgen. Insbesondere kann die Drossel einen wirksamen Strömungsquerschnitt für eine Strömung zur Entlüftung zur Atmosphäre aufweisen, der geringer ist als ein wirksamer Strömungsquerschnitt für eine Strömung vom Ausgang des Rückfallventils zu einem Eingang des Entlüftungsventils oder zu den Eingängen der Entlüftungsventile oder über eine Entlüftungsleitung zu dem oder den Entlüftungsanschlüssen mindestens eines Steuerventils. Somit kann beispielsweise ein ausreichender Druckaufbau in der Leitung zu dem Eingang des Entlüftungsventils erreicht werden, so dass sich das oder die Entlüftungsventile bei geöffnetem Rückfallventil tatsächlich selbst öffnen und eine fluidleitende Verbindung zwischen den Eingängen und Ausgängen dieser Ventile hergestellt wird, obwohl Luft über die Umgehungsleitung abströmt.

Das mindestens eine Entlüftungsventil kann ein Schnellentlüftungsventil sein. Somit kann eine besonders schnelle Entlüftung über das Entlüftungsventil gewährleistet sein. Ein Schnellentlüftungsventil kann insbesondere einen großen Strömungsquerschnitt für eine Verbindung von seinem Ausgang zu seinem Luftablass zur Entlüftung zur Atmosphäre bereitstellen. Ein Schnellentlüftungsventil kann insbesondere über eine Membran verfügen, die eine schnelle Umschaltung der Schaltzustände des Schnellentlüftungsventils ermöglicht. Selbstverständlich können alle Entlüftungsventile, die mit dem Rückfallventil verbunden sind, als Schnellentlüftungsventile ausgebildet sein.

Es kann zweckmäßig sein, dass der Öffnungsdruck des Rückfallventils größer ist als ein durch die elektronische Steuereinrichtung einstellbarer oder eingestellter Betriebsdruck. Somit kann über das Rückfallventil für den Fall, dass der Kompressor über den vorgegebenen Betriebsdruck hinaus fördert, bei Erreichen des Öffnungsdrucks der Kompressor abgeschaltet und vor Überhitzung geschützt werden und/oder eine Regenerierung durchgeführt werden.

Das Rückfallventil kann derart ausgebildet sein, dass es pneumatisch schließt, wenn der Druck in der Versorgungsleitung auf einen Druck unterhalb eines vorbestimmten Schließdrucks abgesunken ist. Der Schließdruck kann gleich oder kleiner sein als der Öffnungsdruck. Insbesondere kann vorgesehen sein, dass der Schließdruck kleiner ist als der Betriebsdruck, so dass ein Druckbereich definiert ist, in welchem das Rückfallventil geöffnet ist, um beispielsweise den Kompressor nicht zu häufig zwischen seinen Schaltzuständen hin- und herzuschalten, oder um eine vollständige Regenerierung des Luftfilters zu ermöglichen. Ein pneumatisches Schließen aufgrund abgesunkenen Drucks kann auf ein Öffnen des Rückfallventils folgen.

Die Erfindung wird nun mit Bezug auf die begleitenden Zeichnungen anhand bevorzugter Ausführungsformen beispielhaft erläutert

Es zeigen:
- Figur 1: eine schematische Teildarstellung einer Druckluftversorgungseinrichtung;
- Figur 2: eine schematische Teildarstellung einer weiteren Druckluftversorgungseinrichtung in einem beispielhaften ersten Schaltmodus;
- Figur 3: die weitere Druckluftversorgungseinrichtung in einem zweiten Schaltmodus;
- Figur 4: die weitere Druckluftversorgungseinrichtung in einem dritten Schaltmodus;
- Figur 5: die weitere Druckluftversorgungseinrichtung in einem vierten Schaltmodus;
- Figur 6: die weitere Druckluftversorgungseinrichtung in einem fünften Schaltmodus;
- Figur 7: die weitere Druckluftversorgungseinrichtung in einem sechsten Schaltmodus; und
- Figur 8: schematisch ein Schnellentlüftungsventil.

In den Figuren stellen durchgezogene Linien und kurz gestrichelte Linien Druckluftverbindungen dar, während lang gestrichelte Linien elektrische Signalleitungen darstellen.

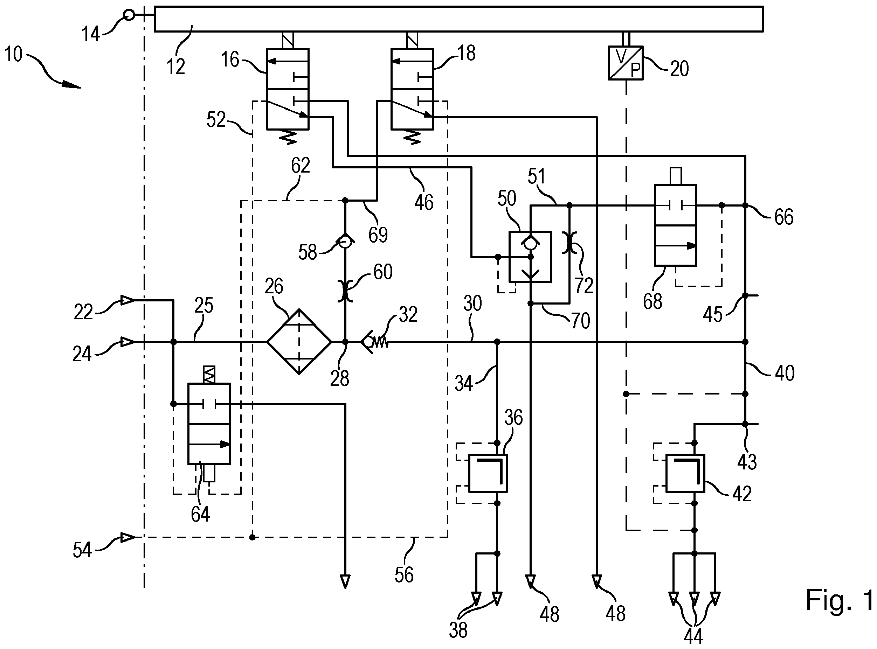

In Figur 1 ist ein Teil einer Druckluftversorgungseinrichtung 10 schematisch dargestellt. Die Druckluftaufbereitungseinrichtung 10 umfasst eine elektronische Steuereinrichtung 12. Diese ist über einen Zentralstecker 14 mit einer Fahrzeugelektronik verbunden oder verbindbar. Die elektronische Steuereinrichtung 12 ist dazu ausgebildet, beispielsweise ein erstes Steuerventil 16 und ein zweites Steuerventil 18 elektrisch anzusteuern, die jeweils als Magnetventil ausgebildet sind. Ein Drucksensor 20 kann ein Drucksignal an die elektronische Steuereinrichtung 12 weitergeben, welches in diesem Beispiel den Druck in der Versorgungsleitung und in einem Verbrauchersystem hinter einem weiter unten beschriebenen Überströmventile angibt. Die Druckluftversorgungseinrichtung 10 weist einen Kompressoranschluss oder Drucklufteingang 22 auf, über den Druckluft von einem Kompressor bereitgestellt werden kann. Über einen externen Anschluss oder Drucklufteingang 24 kann eine externe Befüllung der Druckluftversorgungseinrichtung 10 beziehungsweise daran angeschlossener Verbraucher von außen unter Umgehung des Kompressors erfolgen. Die beiden Eingänge 22, 24 sind über eine Eingangsleitung 25 an einen Luftfilter 26 angeschlossen, der dazu dient, Verunreinigungen aus der Druckluftversorgungseinrichtung zugeführter Luft herauszufiltern, etwa Wasser oder Öl. Hinter dem Luftfilter 26 ist eine Verbindungsleitung 28 zu einer Versorgungsleitung 30 vorgesehen, die durch den Luftfilter 26 gereinigte Druckluft zu einem Eingangsanschluss des ersten Steuerventils 16 führt oder führen kann. Um die Versorgungsleitung 30 gegen einen Druckverlust abzusichern, ist zwischen der Verbindungsleitung 28 und der Versorgungsleitung 30 ein Rückschlagventil 32 vorgesehen. Das Rückschlagventil ist stromabwärts des Luftfilters 26 zu der Versorgungsleitung 30 derart angeordnet, dass Luft nicht über die Versorgungsleitung 30 zum Luftfilter 26 zurückströmen kann. Hinter dem Rückschlagventil 32 zweigt eine Druckluftleitung 34 von der Versorgungsleitung 30 ab. Die Druckleitung 34 führt in diesem Beispiel über ein erstes Überströmventil 36 zu Anschlüssen 38 zur Versorgung einer nicht gezeigten Luftfederanlage.

Hinter der Druckluftversorgungsleitung 34 zweigt eine weitere Druckluftversorgungsleitung 40 von der Versorgungsleitung 30 ab. Diese führt in diesem Beispiel über eine Verzweigung 43 zu einem zweiten Überströmventil 42 und weiter zu Anschlüssen 44 für die Versorgung eines nicht gezeigten ersten Bremskreises. Von der Verzweigung 43 führt eine nicht näher bezeichnete zweite Abzweigung über ein nicht gezeigtes Überströmventil zu einem weiteren Verbraucher, beispielsweise einem zweiten Bremskreis. Ähnlich kann über der Versorgungsleitung 30 über eine weitere Abzweigung 45 eine Versorgung weiterer Druckluftverbraucher erfolgen, wie beispielsweise Anhängerbremsen, einer Feststellbremse oder ähnlicher bekannter Verbrauchereinrichtungen eines Nutzfahrzeugs. Die Sensoreinrichtung 20 ist dazu vorgesehen, den Druck hinter dem Überströmventil 42 und in der Versorgungsleitung 30 zu überwachen.

Die Versorgungsleitung 30 ist weiterhin mit einem Eingangsanschluss des ersten Steuerventils 16 verbunden. Ein Entlüftungsausgang des ersten Steuerventils 16 ist an eine Entlüftungsleitung 46 angeschlossen, die mit einer Entlüftung 48 verbunden ist. In der Entlüftungsleitung 46 ist ein Entlüftungsventil 50 vorgesehen, das einen Eingang, einen Ausgang und einen Luftablass aufweist. In diesem Beispiel ist das Entlüftungsventil 50 als Schnellentlüftungsventil ausgebildet. Der Ausgang des Entlüftungsventils ist über die Entlüftungsleitung 46 mit dem Entlüftungsanschluss des ersten Steuerventils 16 verbunden. Der Luftablass des Entlüftungsventils 50 ist mit der Entlüftung 48 zur Atmosphäre verbunden. Der Eingang des Entlüftungsventils 50 ist mit einer Rückfallleitung 51 verbunden. An einen Ausgangsanschluss des ersten Steuerventils 16 ist eine Steuerleitung 52 angeschlossen. Das erste Steuerventil ist als 3/2-Wegeventil ausgebildet. Die Steuerleitung 52 führt in diesem Beispiel zu einem Steuereingang 54 eines nicht gezeigten Kompressors. Es ist vorgesehen, dass dann, wenn die Steuerleitung 52 belüftet ist, also über die Versorgungsleitung 30 ein Druck oberhalb des Atmosphärendrucks in ihr vorliegt, der Kompressor in einen Energiesparmodus geschaltet wird, etwa indem er ausgekuppelt oder ganz ausgeschaltet wird. Von der Steuerleitung 52 zweigt eine Regenerierungssteuerleitung 56 ab, die an einen Eingangsanschluss des zweiten Steuerventils 18 angeschlossen ist. Insgesamt wirken somit die Versorgungsleitung 30, das erste Steuerventil 16, die Steuerleitung 52 und die Regenerierungssteuerleitung 56 für das zweite Steuerventil 18 als Versorgungsleitung, über die dem Eingangsanschluss des zweiten Steuerventils 18 Druckluft zugeführt wird oder zuführbar ist. Ein Entlüftungsanschluss des zweiten Steuerventils 18 ist mit einer Entlüftung 48 zur Atmosphäre verbunden. Ein Ausgangsanschluss des zweiten Steuerventils 18 ist über eine Regenerierungsleitung 59 mit der Verbindungsleitung 28 zwischen dem Luftfilter 26 und dem Rückschlagventil 32 verbunden. In die Regenerierungsleitung 59, die als dem zweiten Steuerventil zugeordnete Steuerleitung angesehen werden kann, sind hintereinander ein Regenerierungsrückschlagventil 58 und eine Regenerierungsdrossel 60 geschaltet. Im Fall, dass eine Regenerierung durchgeführt wird, verhindert das Regenerierungsrückschlagventil 58, dass für die Regenerierung vorgesehene Luft wieder in Richtung des zweiten Steuerventils 18 in die Leitung 59 strömt. Über die Regenerierungsdrossel 60 wird eine für die Regenerierung geeignete Strömung eingestellt. Somit können das Regenerierungsrückschlagventil 58 und das zweite Steuerventil jeweils als Regenerierungsventil angesehen werden. Zwischen dem Regenerierungsrückschlagventil 58 und dem zweiten Steuerventil 18 zweigt eine Abschaltventilsteuerleitung 62 von der Regenerierungsleitung 59 ab. Die Ablasssteuerleitung 62 führt zu einem Ablassventil 64. Das Ablassventil 64 kann als 2/2-Wegeventil ausgebildet sein. Im Normalzustand, dann, wenn kein Drucksignal über die Ablasssteuerleitung 62 das Ablassventil 64 ansteuert, sperrt das Ablassventil 64 eine Verbindungsleitung zwischen der Eingangsleitung 25 und einer Entlüftung 48 zur Atmosphäre. Wird über die Ablasssteuerleitung 62 ein Drucksignal auf das Ablassventil 64 gegeben, schaltet es in seine Durchgangsstellung, in der es die Eingangsleitung 25 mit der Entlüftung 48 fluidleitend verbindet. Eine derartige Verbindung wird durch das Ablassventil 64 auch dann hergestellt, wenn der Druck in der Eingangsleitung 25 beziehungsweise in der Druckluftversorgungseinrichtung 10 einen vorbestimmten Sicherungsdruck, der bei etwa 14 oder 15 bar liegen kann, überschreitet. Über das Ablassventil 64 kann eine Regenerierung des Luftfilters 26 erfolgen, indem eine Entlüftungsmöglichkeit für aus der Regenerierungsleitung 59 stammende und den Luftfilter 26 durchströmende Luft geschaffen wird.

Die Versorgungsleitung 30 ist außerdem über eine Abzeigung 66 mit einem Rückfallventil 68 verbunden. Insbesondere ist ein Eingang des Rückfallventils 68 über die Abzweigung 66 mit der Versorgungsleitung 30 verbunden, so dass ein in der Versorgungsleitung 30 herrschender Druck am Eingang des Rückfallventils 68 ansteht. Ein Ausgang des Rückfallventils 68 ist mit der Rückfallleitung 51 verbunden. Somit besteht eine Verbindung zwischen dem Ausgang des Rückfallventils 68 und dem Eingang des Entlüftungsventils 50. Von der Rückfallleitung 51 zweigt zwischen dem Rückfallventil 68 und dem Entlüftungsventil 50 eine Umgehungsleitung 70 ab, in der eine Drossel 72 angeordnet ist. Die Umgehungsleitung 70 bietet eine gedrosselte Verbindung zwischen der Rückfallleitung 51 und einer Entlüftung 48 zur Atmosphäre. Das Rückfallventil 68 ist in diesem Beispiel ein 2/2-Wegeventil. Im Normalzustand sperrt das Rückfallventil 68 eine Verbindung zwischen seinem Eingang und Ausgang. Es ist derart ausgebildet, dass es dann, wenn in der Versorgungsleitung ein vorbestimmter Öffnungsdruck überschritten wird, pneumatisch öffnet und eine Verbindung zwischen seinem Ausgang und Eingang herstellt. Der Öffnungsdruck ist zweckmäßigerweise größer als der von der elektronischen Steuereinrichtung 12 überwachte Betriebsdruck, der dem maximalem Druck entspricht, bis zu dem die elektronische Steuereinrichtung 12 die Druckluftversorgungseinrichtung 10 beziehungsweise die Versorgungsleitung 30 befüllt, bevor sie den Kompressor abschaltet.

Im Betrieb wird über den Kompressor die Druckluftversorgungseinrichtung 10 mit Druckluft versorgt. Die Druckluft strömt über die Eingangsleitung 25 durch den Luftfilter 26 und die Verbindungsleitung 28 sowie das Rückschlagventil 32 in die Versorgungsleitung 30. Über diese kann sie sich über Überströmventile, beispielsweise die Überströmventile 36 und 42, und die Abzweigungen 43, 45 auf die Verbrauchersysteme verteilen. Gleichzeitig liegt der Druck in der Versorgungsleitung 30 am Eingangsanschluss des ersten Steuerventils 16 an. Das erste Steuerventil 16 und das zweite Steuerventil 18 befinden sich stromlos, also dann, wenn sie nicht von der elektronischen Steuereinrichtung 12 angesteuert werden, jeweils in einer Normalstellung. In der Normalstellung ist im Ventil der Ausgangsanschluss eines Steuerventils 16, 18 jeweils mit dem Entlüftungsausgang desselben Steuerventils 16, 18 verbunden, während der Eingangsanschluss abgesperrt ist. Somit ist im gezeigten stromlosen Zustand der mit der Steuerleitung 52 verbundene Ausgangsanschluss des ersten Steuerventils 16 mit dem Entlüftungsanschluss verbunden, der über die Entlüftungsleitung 46 und das Entlüftungsventil 50 mit der Entlüftung 48 verbunden ist. Da bei funktionierender elektronischer Steuerung der Betriebsdruck nicht überschritten wird, bleibt das Rückfallventil 68 geschlossen. Daher ist die Rückfallleitung 51 entlüftet, und das Entlüftungsventil 50 befindet sich in einer Stellung, in welcher es die Entlüftungsleitung 46 entlüftet. Im gezeigten stromlosen Zustand ist das zweite Steuerventil 18 derart geschaltet, dass die Regenerierungsleitung 59 mit dem Entlüftungsanschluss des zweiten Steuerventils 18 und somit mit der Entlüftung 48 verbunden ist. Im bestromten Zustand sind das erste Steuerventil 16 und das zweite Steuerventil 18 in Durchlassstellung geschaltet. In der Durchlassstellung sind jeweils der Eingangsanschluss und der Ausgangsanschluss fluidleitend miteinander verbunden, während der Entlüftungsanschluss abgesperrt ist. Somit ist in der Durchlassstellung der mit der Steuerleitung 52 verbundene Ausgangsanschluss des ersten Steuerventils 16 mit dem mit der Versorgungsleitung 30 verbundenen Eingangsanschluss fluidleitend verbunden. Das zweite Steuerventil 18 ist in der Durchlassstellung derart geschaltet, dass die Regenerierungssteuerleitung 56 über den Eingangsanschluss des zweiten Steuerventils 18 fluidleitend über den Ausgangsanschluss des zweiten Steuerventils 18 mit der Regenerierungsleitung 59 verbunden ist. Erreicht der Druck innerhalb der Druckluftversorgungseinrichtung 10 den vorgegebenen Betriebsdruck, der beispielsweise bei etwa 12,5 bar liegen kann, schaltet die elektronische Steuereinrichtung 12 den Kompressor ab. Dazu wird das erste Steuerventil 16 in seine Durchlassstellung geschaltet, so dass über die Versorgungsleitung 30 die Steuerleitung 52 belüftet wird und somit der hohe Betriebsdruck anliegt. Der Druck auf der Steuerleitung 52 wird einerseits über den Anschluss 54 an den Kompressor weitergegeben, der daraufhin in seinen Energiesparzustand schaltet. Des Weiteren liegt der Druck in der Steuerleitung 52 über die Leitung 56 auch am Eingangsanschluss des zweiten Steuerventils 18 an. Wird nun auch das zweite Steuerventil 18 von der elektronischen Steuereinrichtung 12 in seine Durchlassstellung geschaltet, kann Druckluft von der Versorgungsleitung 30 über das erste Steuerventil 16, die Steuerleitung 52, die Regenerierungssteuerleitung 56 und das zweite Steuerventil 18 in die Regenerierungsleitung 59 strömen. Somit wird einerseits über die Ablasssteuerleitung 62 das Ablassventil 64 in seine Durchlassstellung geschaltet. Andererseits kann Druckluft über das Regenerierungsrückschlagventil 58, die Regenerierungsdrossel 60 und den Luftfilter 26 zu einem Eingangsanschluss des Ablassventils 64 strömen. Über dieses ist eine Verbindung zur Entlüftung 48 hergestellt, so dass Druckluft entgegen der herkömmlichen Strömungsrichtung durch den Luftfilter 26 strömen kann, um diesen zu regenerieren. Somit kann die elektronische Steuereinrichtung 12 durch Ansteuerung des ersten Steuerventils 16 einen Energiesparmodus für den Kompressor ansteuern. Zusätzlich kann durch Ansteuerung des zweiten Steuerventils 18 eine Regenerierung des Luftfilters 26 vorgenommen werden. Wird das erste Steuerventil 16 wieder in seine Normalstellung geschaltet, wird die Steuerleitung 52 mit der Entlüftungsleitung 46 verbunden. Luft strömt somit über die Entlüftungsleitung 46 und das Entlüftungsventil 50 aus der Steuerleitung 52. Da das Entlüftungsventil 50 als Schnellentlüftungsventil mit großem Entlüftungsquerschnitt ausgebildet ist, wird ein schneller Druckabfall in der Steuerleitung 52 erreicht, wodurch der Kompressor schnell in seinen Betriebszustand versetzt wird. Ferner wird über die Versorgungsleitung 30 kein weiterer Druck zum zweiten Steuerventil 18 nachgeliefert, wodurch die Regenerierung gestoppt wird. Zweckmäßigerweise wird außerdem das zweite Steuerventil 18 in seinen stromlosen Zustand versetzt, wodurch die Regenerierungsleitung 59 und die Ablasssteuerleitung 62 ebenfalls entlüftet werden. Das Ablassventil 64 sperrt daher die Verbindung zur Entlüftung. Sollte nun die elektronische Steuereinrichtung 12 ausfallen oder die Steuerventile 16, 18 aus anderen Gründen nicht mehr bestrombar oder ansteuerbar sein, würde der Kompressor den Druck in der Druckluftversorgungseinrichtung 10 bis zum Sicherungsdruck ansteigen lassen, woraufhin das Ablassventil 64 öffnet. Dabei müsste der Kompressor gegen einen hohen in der Druckluftversorgungseinrichtung 10 herrschenden Druck erhebliche Arbeit leisten, wodurch sich eine starke Belastung und eine Überhitzungsgefahr für den Kompressor ergeben. Um dies zu umgehen, ist das Rückfallventil 68 vorgesehen. Dieses öffnet bei Erreichen des Öffnungsdrucks, so dass über die Rückfallleitung 51 der Druck in der Versorgungsleitung 30 an den Eingang des Entlüftungsventils 50 geführt wird. Durch die in der Umgehungsleitung 70 vorgesehene Drossel 72 wird ein ausreichender Druckaufbau vor dem Entlüftungsventil 50 ermöglicht, obwohl die Rückfallleitung 51 mit der Atmosphäre verbunden ist. Dazu ist der Strömungsquerschnitt der Drossel 72 geeignet gewählt. Somit öffnet das Entlüftungsventil 50 und verbindet seinen Eingang mit seinem Ausgang. Daher kann Druckluft von der Versorgungsleitung 30 über das Rückfallventil 68 und das Entlüftungsventil 50 in den Entlüftungsanschluss des ersten Steuerventils 16 strömen. Im stromlosen Zustand ist dieser Entlüftungsanschluss mit dem Ausgangsanschluss des ersten Steuerventils 16 verbunden, so dass sich ein Druckaufbau in der Steuerleitung 52 ergibt, wodurch der Kompressor in seinen Energiesparzustand geschaltet wird. Fällt der Druck in der Versorgungsleitung 30 beispielsweise durch Bremsvorgänge oder durch schleichenden Verlust über die Umgehungsleitung 70 unter einen vorbestimmten Schließdruck, schließt das Rückfallventil 68 wieder und unterbricht so die Druckluftzufuhr über die Rückfallleitung 51. Somit sperrt, spätestens nach vollständigem Druckverlust in der Rückfallleitung 51 über die Umgehungsleitung 70, das Entlüftungsventil 50 und verbindet seinen Ausgang wieder mit der Entlüftung 48. Die Steuerleitung 52 wird somit entlüftet und der Kompressor wieder umgeschaltet, so dass erneut Druckluft vom Kompressor über den Eingang 22 geliefert wird.

Es ist zweckmäßig, wenn das Rückfallventil 68 pneumatisch bei einem Druck in der Versorgungsleitung 30 öffnet, der zwischen dem normalen Betriebsdruck, also etwa 12,5 bar, und einem maximal zugelassenen Druck, also etwa dem Sicherungsdruck von etwa 15 bar liegt. Der Schließdruck kann unterhalb des Öffnungsdrucks liegen. Insbesondere kann der Schließdruck gleich oder kleiner sein als der Betriebsdruck, um einen geeigneten Druckbereich zu definieren, in dem der Kompressor abgeschaltet beziehungsweise im Energiesparmodus geschaltet bleibt. Es ist vorstellbar, das Entlüftungsventil 50 wegzulassen. In diesem Zusammenhang kann das Rückfallventil 68 als 3/2-Wegeventil ausgebildet sein, das einen mit einer Entlüftung 48 zur Atmosphäre verbundenen Entlüftungsausgang aufweist. In der Normalstellung kann der Entlüftungsausgang des Rückfallventils 68 mit dem Ausgang des Rückfallventils 68 verbunden sein. Der Ausgang des Rückfallventils 68 kann dann direkt an die Entlüftungsleitung 46 angeschlossen sein, ohne dass eine Umgehungsleitung oder eine weitere Verbindung zur Entlüftung 48 notwendig wäre. Somit kann der Entlüftungsausgang des ersten Steuerventils 16 direkt mit dem Ausgang des Rückfallventils 68 verbunden sein. Sollte das Rückfallventil als 2/2-Wegeventil ausgebildet sein, kann auch ohne das Entlüftungsventil eine Umgehungsleitung mit Drossel vorgesehen sein, um einen zu schnellen Druckabfall zu verhindern.

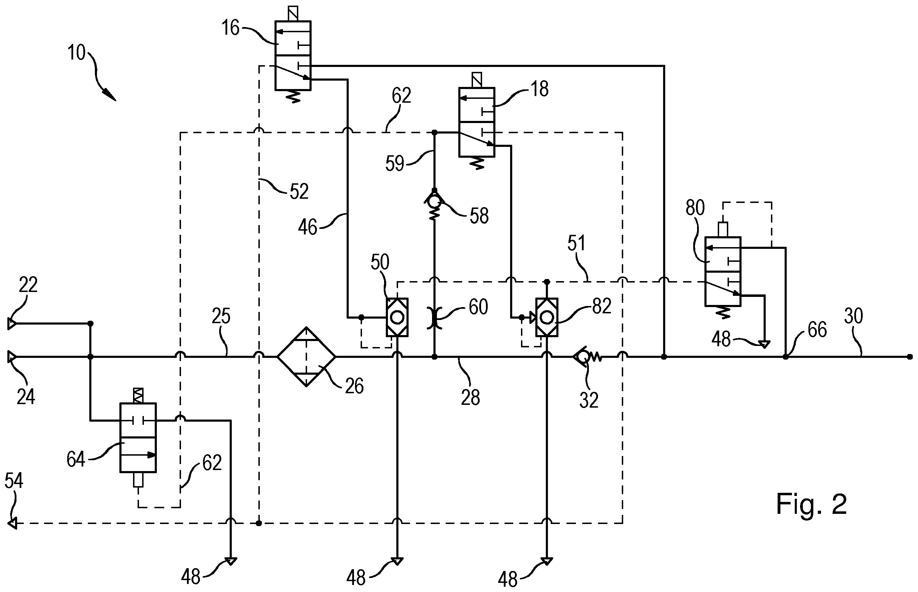

Die Figuren 2 bis 7 zeigen eine schematische Teildarstellung einer weiteren Druckluftversorgungseinrichtung in unterschiedlichen Schaltzuständen. Aus Gründen der Einfachheit werden im Folgenden Elemente, die identisch oder funktional ähnlich zu Elementen der in Figur 1 gezeigten Druckluftversorgungseinrichtung sind, mit gleichen Bezugszeichen versehen.

Die in Figur 2 gezeigte Druckluftversorgungseinrichtung 10 weist einen Kompressoranschluss 22 und einen externen Befüllungsanschluss 24 auf. Die elektronische Steuereinrichtung mit Zentralstecker und damit verbundene elektrische oder elektronische Komponenten sind nicht gezeigt, können aber ähnlich wie in Figur 1 vorgesehen sein. Über die Eingangsleitung 25, den Luftfilter 26, die Verbindungsleitung 28 und das Rückschlagventil 32 kann Druckluft zur Versorgungsleitung 30 strömen, die mit nicht gezeigten Verbrauchersystemen verbunden sein kann. Ein Zweig der Versorgungsleitung 30 ist zu einem Eingangsanschluss eines als Magnetventil ausgebildeten ersten Steuerventils 16 geführt. Ein Ausgangsanschluss des ersten Steuerventils 16 ist mit einer Steuerleitung 52 verbunden, die an einen Steuereingang 54 eines Kompressors angeschlossen ist. Zwischen dem Steuereingang 54 und dem ersten Steuerventil 16 kann ein nicht dargestelltes Entlüftungsventil, insbesondere ein Schnellentlüftungsventil geschaltet sein. Insbesondere kann ein Eingang des Entlüftungsventils mit dem Ausgangsanschluss des ersten Steuerventils 16 verbunden sein. Ein Ausgang des Entlüftungsventils kann mit dem Steuereingang 54 verbunden sein. Ein Luftablass kann mit einer Entlüftung zur Atmosphäre verbunden sein, um beim Einschalten des Kompressors ein besonders schnelles Umschalten zu ermöglichen. Eine ähnliche Lösung ist auch im Zusammenhang mit dem in Figur 1 gezeigten Beispiel möglich.

Von der Steuerleitung 52 zweigt eine Regenerierungssteuerleitung 56 ab, die mit einem Eingangsanschluss eines als Magnetventil ausgebildeten zweiten Steuerventils 18 verbunden ist. Ein Ausgangsanschluss des zweiten Steuerventils 18 ist mit einer Regenerierungsleitung 59 verbunden, die über ein Regenerierungsrückschlagventil 58 und eine Drossel 60 mit der Verbindungsleitung 28 verbunden ist.

Zwischen dem Rückschlagventil 58 und dem zweiten Steuerventil 18 zweigt eine Ablasssteuerleitung 62 von der Regenerierungsleitung 59 ab. Die Ablasssteuerleitung 62 ist zur Steuerung eines Ablassventils 64 verbunden. Das Ablassventil 64 ist in einer Verbindungsleitung zwischen der Eingangsleitung 25 und einer Entlüftung 48 zur Atmosphäre angeordnet. Ähnlich wie im mit Bezug auf Figur 1 beschriebenen Beispiel ist eine Abzweigung 66 von der Versorgungsleitung 30 vorgesehen, die mit einem Eingang eines Rückfallventils 80 verbunden ist. Hinsichtlich der Verbindungen der Entlüftungsanschlüsse der Steuerventile 16, 18 und der Ausgestaltung und Anordnung des Rückfallventils 80 unterscheidet sich das in Figur 2 gezeigte Beispiel von dem in Figur 1 gezeigten Beispiel. Das Rückfallventil 80 ist als 3/2-Wegeventil ausgebildet. Es hat einen Eingang, einen Ausgang und einen Entlüftungsausgang. Der Entlüftungsausgang ist mit einer Entlüftung 48 zur Atmosphäre verbunden. In seiner Normalstellung verbindet das Rückfallventil 80 seinen Entlüftungsausgang mit seinem Ausgang und sperrt seinen Eingang ab. Somit kann in der Normalstellung keine Druckluft vom Eingang zum Ausgang des Rückfallventils 80 strömen. Liegt in der Versorgungsleitung 30 und somit am Eingang des Rückfallventils 80 mindestens ein vorbestimmter Öffnungsdruck an, der wie oben beschrieben definiert sein kann, öffnet das Rückfallventil 80 derart, dass es seinen Eingang mit seinem Ausgang verbindet und den Entlüftungsausgang absperrt. In diesem Beispiel kann der Öffnungsdruck bei 14 bar liegen. Fällt der Druck in der Versorgungsleitung 30 und am Eingang des Rückfallventils 80 unter einen bestimmten Schließdruck, der wie oben beschrieben definiert sein kann, so kehrt das Rückfallventil 80 in seine Normalstellung zurück. In diesem Beispiel kann der Schließdruck bei 11 bar liegen und somit kleiner als der Betriebsdruck sein, der beispielsweise 12,5 bar betragen kann. Der Ausgang des Rückfallventils 80 ist über eine Rückfallleitung 51 mit dem Eingang eines ersten Entlüftungsventils 50 und eines zweiten Entlüftungsventils 82 verbunden. In diesem Beispiel sind beide Entlüftungsventile 50, 82 als Schnellentlüftungsventile ausgebildet, um eine schnelle Umschaltung zu ermöglichen. Ein Ausgang des ersten Entlüftungsventils 50 ist über eine Entlüftungsleitung 46 mit dem Entlüftungsausgang des ersten Steuerventils 16 verbunden. Ein Ausgang des zweiten Entlüftungsventils 82 ist mit dem Entlüftungsausgang des zweiten Steuerventils 18 verbunden. Ein Luftablass des ersten Entlüftungsventils 50 und der Luftablass des zweiten Entlüftungsventils 82 sind jeweils mit einer Entlüftung 48 zur Atmosphäre verbunden. Es versteht sich, dass in den hier aufgeführten Beispielen die Entlüftungen zur Atmosphäre einzeln oder als eine gemeinsame Entlüftung ausgebildet sein können.

Für die in Figur 2 gezeigt Druckluftversorgungseinrichtung ergeben sich verschiedene Schaltzustände oder Schaltmoden. Grundsätzlich verbleibt das Rückfallventil 80 solange in seiner Normalstellung, wie der Druck in der Versorgungsleitung 30 den Öffnungsdruck nicht erreicht. In der Normalstellung des Rückfallventils 80 ist die Rückfallleitung 51 entlüftet, weshalb beide Entlüftungsventile sich in einem Zustand befinden, in welchem ihre Ausgänge zur Atmosphäre entlüftet sind. Solange die elektronische Steuereinrichtung funktionsfähig ist, vermeidet sie, dass der Druck in der Versorgungsleitung über einen vorbestimmten Betriebsdruck ansteigt, so dass der über diesem Betriebsdruck liegende Öffnungsdruck im Normalbetrieb nicht erreicht wird.

Liegt der Druck in der Druckluftversorgungseinrichtung und insbesondere in der Versorgungsleitung 30 unterhalb des Betriebsdrucks, schaltet die elektronische Steuereinrichtung die Druckluftversorgungseinrichtung in einen ersten Schaltmodus, der in Figur 2 gezeigt ist. Im ersten Schaltmodus belässt die elektronische Steuereinrichtung das erste Steuerventil 16 und das zweite Steuerventil 18 jeweils in Normalstellung. Somit bleiben die Steuerleitung 52 und die Regenerierungsleitung 59 über die Entlüftungsventile 50 und 82 entlüftet. Der Kompressor bleibt angeschaltet und fördert Druckluft, die über den Drucklufteingang 22 eingespeist wird.

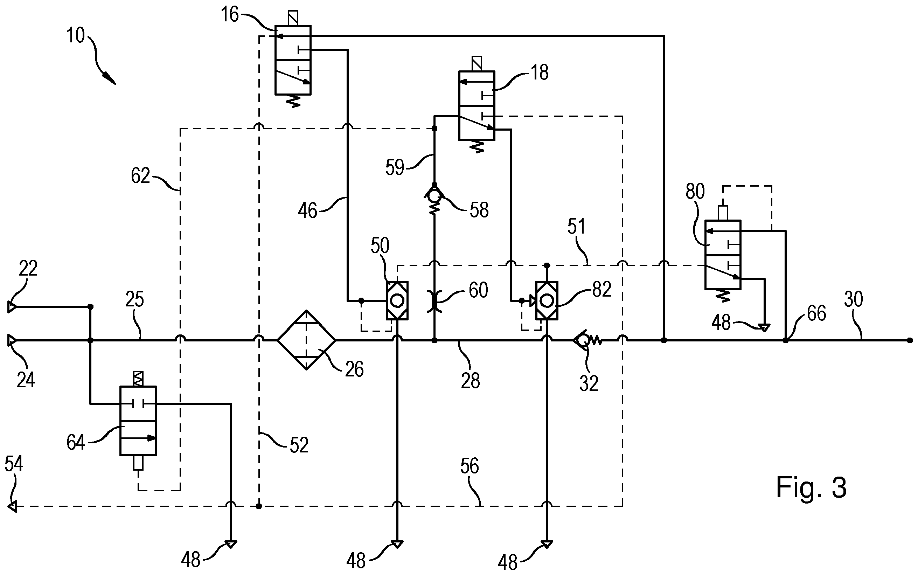

Wird der Betriebsdruck erreicht, kann die elektronische Steuereinrichtung einen zweiten Schaltmodus ansteuern, der in Figur 3 gezeigt ist. Im zweiten Schaltmodus wird das erste Steuerventil 16 durch die elektronische Steuereinrichtung in seine Durchlassstellung geschaltet, während das zweite Steuerventil 18 in der Normalstellung verbleibt. Somit kann Druckluft über das erste Steuerventil 16 von der Versorgungsleitung 30 in die Steuerleitung 52 strömen und den Steuereingang 54 des Kompressors mit Druck beaufschlagen. Somit wird der Kompressor in seinen Energiesparmodus geschaltet. Dieser Modus kann als Abschaltmodus bezeichnet werden, in dem keine Druckluft über den Drucklufteingang 22 eingespeist wird.

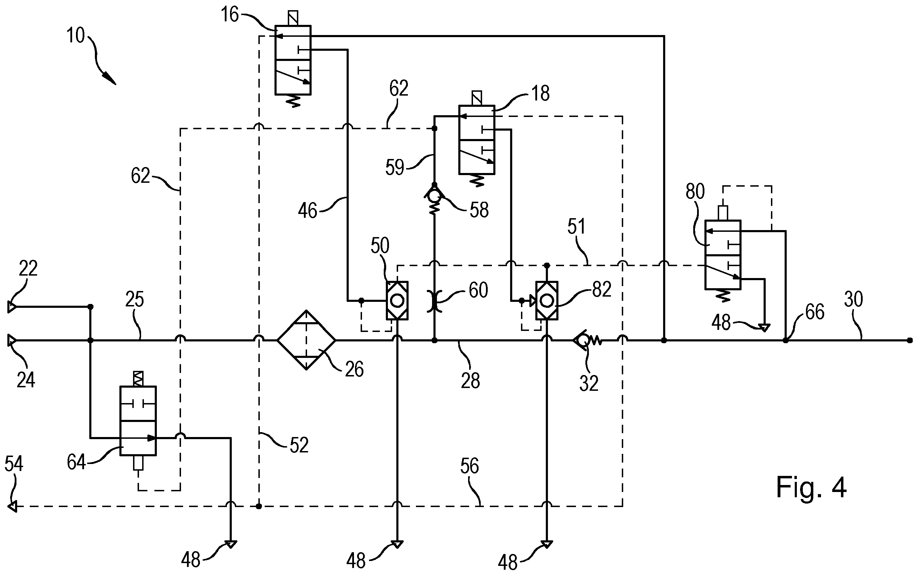

In einem in Figur 4 gezeigten dritten Schaltmodus kann die elektronische Steuereinrichtung neben dem ersten Steuerventil 16 auch das zweite Steuerventil 18 in seine Durchlassstellung schalten. Somit wird der Kompressor in seinen Energiesparmodus geschaltet und über die Steuerleitung 52, die Regenerierungsleitung 56 und das zweite Steuerventil 18 auch die Regenerierungsleitung 59 belüftet. Dadurch wird über die Ablasssteuerleitung 62 das Ablassventil 64 in seine Durchlassstellung geschaltet. Somit erfolgt über das Rückschlagventil 58, die Drossel 60, den Luftfilter 26 und das offene Ablassventil 64 eine Regenerierung des Luftfilters 26. Dieser Schaltmodus kann als Regenerierungsmodus bezeichnet werden.

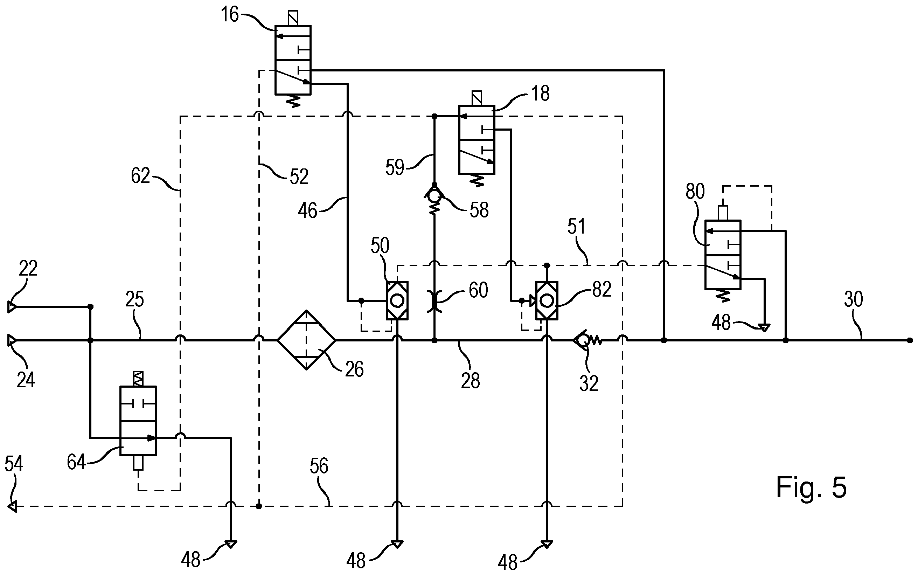

Wird aus dem dritten Schaltmodus das erste Steuerventil 16 in seine Normalstellung geschaltet, indem es nicht mehr bestromt wird, ergibt sich ein vierter Schaltmodus, der in Figur 5 gezeigt ist. Bleibt das Ablassventil 64 aufgrund noch in der Leitung 62 anstehenden Restdrucks über einen gewissen Verzögerungszeitraum offen, kann in den Leitungen, insbesondere in der Steuerleitung 52, verbliebene Luft durch die Regenerierungsleitung 59 und die Verbindungsleitung 28 über das Ablassventil 64 abgelassen werden und dabei die Leitungen reinigen. Dazu kann es vorteilhaft sein, wenn das Ablassventil 64 derart ausgebildet ist, dass es bei einem geringen Druck in der Leitung 62 und/oder auf seinen Steueranschluss öffnet oder geöffnet bleibt. Der vierte Schaltzustand kann als ein Übergangszustand angesehen werden, da sich die Restluft in den Leitungen in der Regel schnell abbaut.

Bei den oben beschriebenen Schaltmoden verbleibt das Rückfallventil 80 in seiner Normalstellung und die elektronische Steuereinrichtung funktioniert. Fällt hingegen die elektronische Steuereinrichtung aus, verbleiben das erste Steuerventil 16 und das zweite Steuerventil 18 in ihrer Normalstellung. Es ergeben sich jedoch zwei weitere Rückfall-Schaltmoden in Abhängigkeit von der Schaltstellung des Rückfallventils 80.

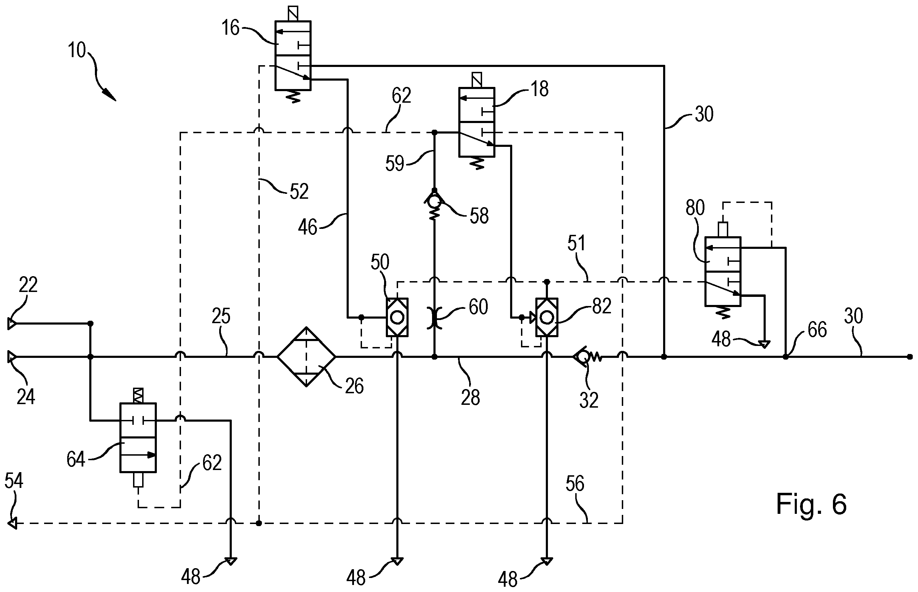

Der in Figur 6 gezeigte erste Rückfallmodus oder fünfte Schaltmodus wird eingenommen, wenn das Rückfallventil 80 sich in seiner Normalstellung befindet. Dieser Fall entspricht hinsichtlich der Schaltstellungen der Ventile dem ersten Schaltmodus, so dass der Kompressor dazu betrieben wird, über den Drucklufteingang 22 Druckluft einzuspeisen. Die Schaltstellung des ersten Steuerventils 16 und des zweiten Steuerventils 18 beruht nun allerdings nicht auf einer gezielten Ansteuerung durch die elektronische Steuereinrichtung, sondern ergibt sich durch den Ausfall derselben.

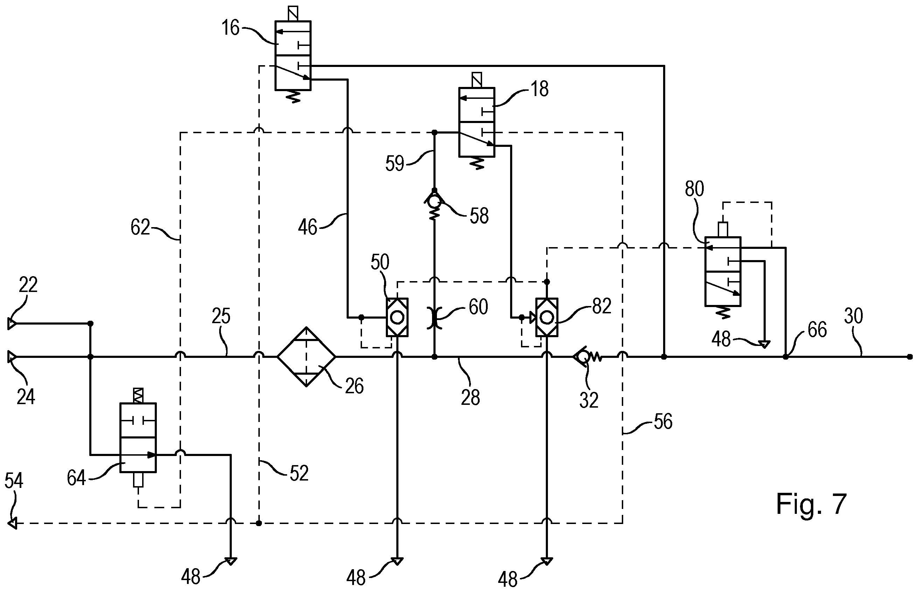

Wird nun in der Versorgungsleitung 30 durch Druckluftzufuhr vom Kompressor der Öffnungsdruck des Rückfallventils 80 erreicht, öffnet dieses pneumatisch eine Verbindung zwischen seinem Ausgang und seinem Eingang. Dies entspricht dem in Figur 7 gezeigten sechsten Schaltmodus oder dem zweiten Rückfallmodus. Dadurch werden über die Rückfallleitung 51 die Eingänge der Entlüftungsventile 50, 82 belüftet. Somit öffnen beide Entlüftungsventile 50, 82 und stellen jeweils eine Verbindung zwischen dem Ausgang des Rückfallventils 80 und dem Entlüftungsausgang des angeschlossenen Steuerventils 16, 18 her. Somit wird die Steuerleitung 52 über den Entlüftungsanschluss des Steuerventils 16 aus der Versorgungsleitung 30 belüftet. Auch die Regenerierungsleitung 59 wird über den Entlüftungsanschluss des zweiten Steuerventils 18 aus der Versorgungsleitung 30 belüftet. Somit wird der Kompressor in seinen Energiesparmodus geschaltet. Darüber hinaus wird über das zweite Steuerventil 18 eine Regenerierung des Luftfilters 26 durchgeführt. Somit entspricht dieser sechste Schaltmodus funktional dem dritten Schaltmodus. In einer alternativen Ausgestaltung kann beispielsweise auf das zweite Entlüftungsventil 82 verzichtet werden und der Entlüftungsausgang des zweiten Steuerventils 18 direkt mit der Entlüftung 48 verbunden sein. Diese Änderung der Druckluftversorgungseinrichtung hätte auf den ersten bis fünften Schaltmodus keine Auswirkung. Lediglich im sechsten Schaltmodus könnte die Regenerierungsleitung 59 nicht mehr mit Druckluft versorgt werden. Somit würde im sechsten Schaltmodus keine Regenerierung mehr erfolgen, sehr wohl aber eine Umschaltung des Kompressors in den Energiesparmodus, ähnlich wie es mit Bezug auf Figur 1 erläutert wurde.

Es ist also über das Rückfallventil 80 ohne großen Aufwand eine Steuerung der Druckluftversorgungsanlage 10 in einen Energiesparmodus oder in Energiespar- und Regenerierungsmodus möglich, obwohl die elektronische Steuereinrichtung ausgefallen ist. Fällt der Druck in der Versorgungsleitung 30 auf einen Schließdruck ab, der in diesem Fall 11 bar beträgt, schließt das Rückfallventil 80 wieder. Somit wird die Rückfallleitung 51 entlüftet, wodurch die Entlüftungsventile 50, 82 ebenfalls umgeschaltet werden. Somit werden auch die Entlüftungsanschlüsse des ersten Steuerventils 16 und des zweiten Steuerventils 18 entlüftet, und die Druckluftversorgungseinrichtung 10 fällt in den ersten Rückfallmodus zurück.

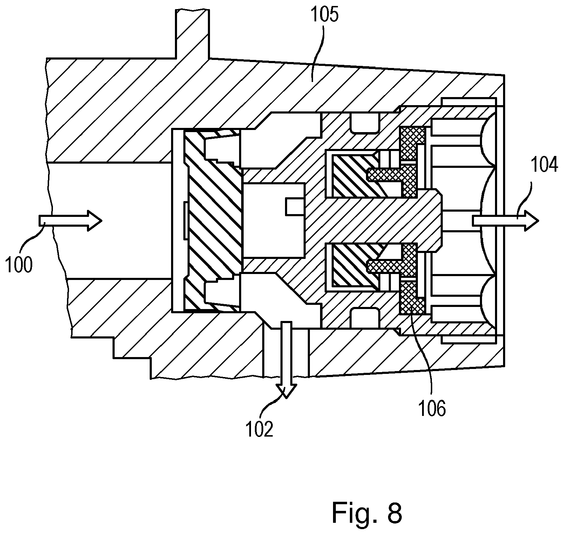

Figur 8 zeigt schematisch ein Entlüftungsventil, wie es in den oben genannten Beispielen verwendet werden kann. Das Entlüftungsventil ist als Schnellentlüftungsventil ausgebildet und weist einen Eingang 100, einen Ausgang 102 und einen Luftablass 104 auf, die in einem Ventilgehäuse 105 ausbildet sind. In einer Gehäuseaufnahme des Ventilgehäuses 105 ist ferner ein Ventilkörper 106 aufgenommen, der geeignet gegen das Ventilgehäuse 105 abgedichtet ist und in dem eine Membran aufgenommen ist. Der Ventilkörper 106 weist in seinem Inneren eine Leitung auf, über die der Luftablass 104 und der Ausgang 102 fluidleitend miteinander verbunden werden können. Liegt an dem Eingang 100 ein Druck an, sperrt die Membran die Verbindung zwischen dem Ausgang 102 und dem Luftablass 104 und stellt eine fluidleitende Verbindung zwischen dem Ausgang 102 und dem Eingang 100 her. In der Normalstellung ist der Eingang 100 jedoch entlüftet, und die Membran sperrt den Eingang 100 ab und öffnet eine Verbindung zwischen dem Ausgang 102 und dem Luftablass 104. Dadurch lässt sich ein großer Strömungsquerschnitt für das Entlüften des Ausgangs über den Luftablass 104 bereitstellen. Darüber hinaus ermöglicht die Membran sehr schnelle Umschaltzeiten des Ventils zwischen seinen Schaltstellungen.

### Bezugszeichenliste

- 10: Druckluftversorgungseinrichtung
- 12: elektronische Steuereinrichtung
- 14: Zentralstecker
- 16: erstes Steuerventil
- 18: zweites Steuerventil
- 20: Sensoreinrichtung
- 22: Kompressoranschluss
- 24: externer Druckluftanschluss
- 25: Eingangsleitung
- 26: Luftfilter
- 28: Verbindungsleitung
- 30: Versorgungsleitung
- 32: Rückschlagventil
- 34: Druckluftversorgungsleitung
- 36: Überschlagsventil
- 38: Versorgungsanschlüsse
- 40: zweite Druckluftversorgungsleitung
- 42: Überströmventil
- 43: Abzweigung
- 44: Verbraucheranschlüsse
- 45: Abzweigung
- 46: Entlüftungsleitung
- 48: Entlüftung
- 50: Entlüftungsventil
- 51: Rückfallleitung
- 52: Steuerleitung
- 54: Kompressorsteueranschluss
- 56: Regenerierungssteuerleitung
- 58: Regenerierungsrückschlagventil
- 59: Regenerierungsleitung
- 60: Regenerierungsdrossel
- 62: Ablassventilsteuerleitung
- 64: Ablassventil
- 66: Abzweigung
- 68: Rückfallventil

- 70: Umgehungsleitung
- 72: Drossel
- 80: Rückfallventil
- 82: Entlüftungsventil

- 100: Eingang
- 102: Ausgang
- 104: Luftablass
- 105: Ventilgehäuse
- 106: Ventilkörper

## Patentansprüche

1. Druckluftversorgungseinrichtung (10) für Nutzfahrzeuge, wobei die Druckluftversorgungseinrichtung (10) mit einer elektronischen Steuereinrichtung (12) elektrisch verbunden oder verbindbar ist, und wobei die Druckluftversorgungseinrichtung (10) aufweist:
mindestens ein Steuerventil (16, 18), das über die elektronische Steuereinrichtung (12) ansteuerbar ist, wobei das Steuerventil (16, 18) mindestens einen Eingangsanschluss, einen Entlüftungsanschluss und einen Ausgangsanschluss aufweist;
eine Steuerleitung (52), die mit dem Ausgangsanschluss des Steuerventils (16, 18) verbunden ist, wobei die Steuerleitung (52) mit einem Steuereingang eines Kompressors und/oder für eine Regenerierung mit einem Luftfilter (26) verbunden oder verbindbar ist;
eine Versorgungsleitung (30), über die Druckluft zu dem Eingangsanschluss des Steuerventils (16, 18) geführt oder führbar ist;
eine Entlüftungsleitung (46), die mit dem Entlüftungsanschluss des Steuerventils (16) verbunden ist; und
ein Rückfallventil (68, 80), wobei ein Eingang des Rückfallventils (68, 80) mit der Versorgungsleitung (30) verbunden ist und ein Ausgang des Rückfallventils (68, 80) mit der Entlüftungsleitung (46) verbunden oder verbindbar ist;
wobei das Rückfallventil (68, 80) derart ausgebildet ist, dass es pneumatisch öffnet, wenn in der Versorgungsleitung (30) ein Druck vorliegt, der einem vorbestimmten Öffnungsdruck entspricht oder diesen übersteigt,
**dadurch gekennzeichnet, dass** ein Entlüftungsventil (50) mit einem Eingang (100), einem Ausgang (102) und einem Luftablass (104) vorgesehen ist, wobei der Eingang (100) des Entlüftungsventils (50) mit dem Ausgang des Rückfallventils (68, 80) verbunden oder verbindbar ist und der Ausgang des Entlüftungsventils (50) mit dem Entlüftungsanschluss des Steuerventils (16, 18) verbunden oder verbindbar ist.

2. Druckluftversorgungseinrichtung nach Anspruch 1, wobei die Druckluftversorgungseinrichtung (10) ein über die elektronische Steuereinrichtung (12) ansteuerbares zweites Steuerventil (18) aufweist, wobei ein Ausgangsanschluss des zweiten Steuerventils (18) für eine Regenerierung mit dem Luftfilter verbunden oder verbindbar ist.

3. Druckluftversorgungseinrichtung nach Anspruch 2, wobei ferner ein Entlüftungsanschluss des zweiten Steuerventils (18) mit einem Ausgang (102) eines zweiten Entlüftungsventils (82) verbunden ist.

4. Druckluftversorgungseinrichtung nach einem der Ansprüche 1 bis 3, wobei der Ausgang des Rückfallventils (68, 80) mit einem Eingang (100) eines zweiten Entlüftungsventils (82) verbunden ist.

5. Druckluftversorgungseinrichtung nach einem der Ansprüche 1 bis 4, wobei zwischen dem Ausgang des Rückfallventils (68) und dem Eingang (100) des mindestens einen Entlüftungsventils (50) eine Umgehungsleitung (70) vorgesehen ist, welche mit einer Entlüftung (48) verbunden ist.

6. Druckluftversorgungseinrichtung nach Anspruch 5, wobei in der Umgehungsleitung (70) eine Drossel (72) vorgesehen ist.

7. Druckluftversorgungseinrichtung nach einem der Ansprüche 1 bis 6, wobei das mindestens eine Entlüftungsventil (50, 82) ein Schnellentlüftungsventil ist.

8. Druckluftversorgungseinrichtung nach einem der Ansprüche 1 bis 7, wobei der Öffnungsdruck des Rückfallventils (68, 80) größer ist als ein durch die elektronische Steuereinrichtung (12) einstellbarer oder eingestellter Betriebsdruck.

9. Druckluftversorgungseinrichtung nach einem der Ansprüche 1 bis 8, wobei das Rückfallventil (68, 80) derart ausgebildet ist, dass es pneumatisch schließt, wenn der Druck in der Versorgungsleitung (30) auf einen Druck unterhalb eines vorbestimmten Schließdrucks abgesunken ist.

## Claims

1. Compressed air supply device (10) for utility vehicles, wherein the compressed air supply device (10) is or can be connected electrically to an electronic i control device (12), and wherein the compressed air supply device comprises:
at least one control valve (16, 18) which can be controlled by the electronic control device (12), such that the control valve (16, 18) has at least one inlet connection, a venting connection and an outlet connection;
a control line (52) which is connected to the outlet connection of the control valve (16, 18), wherein the control line (52) is or can be connected to a control inlet of a compressor and/or, for a regeneration operation, to an air filter (26);
a supply line (30), by way of which compressed air is or can be passed to the inlet connection of the control valve (16, 18);
a venting line (46), which is connected to the venting connection of the control valve (16); and
a back-up valve (68, 80), such that an inlet of the back-up valve (68, 80) is connected to the supply line (30) and an outlet of the back-up valve (68, 80) is or can be connected to the venting line (46),
wherein the back-up valve (68, 80) is designed such that it opens pneumatically when the pressure in the supply line (30) corresponds to or exceeds a predetermined opening pressure,
**characterised in that** a venting valve (50) with an inlet (100), an outlet (102) and an air discharge (104) is provided, such that the inlet (100) of the venting valve (50) is or can be connected to the outlet of the back-up valve (68, 80) and the outlet of the venting valve (50) is or can be connected to the venting connection of the control valve (16, 18).

2. Compressed air supply device according to Claim 1, wherein the compressed air supply device (10) comprises a second control valve (18) which can be controlled by the electronic control device (12), so that an outlet connection of the second control valve (18) is or can be connected to the air filter for a regeneration operation.

3. Compressed air supply device according to Claim 2, wherein a venting connection of the second control valve (18) is connected to an outlet (102) of a second venting valve (82).

4. Compressed air supply device according to any of Claims 1 to 3, wherein the outlet of the back-up valve (68, 80) is connected to an inlet (100) of a second venting valve (82).

5. Compressed air supply device according to any of Claims 1 to 4, wherein between the outlet of the back-up valve (68) and the inlet (100) of the at least one venting valve (50) a bypass line (70) is provided, which is connected to a vent (48).

6. Compressed air supply device according to Claim 5, wherein a throttle (72) is provided in the bypass line (70).

7. Compressed air supply device according to any of Claims 1 to 6, wherein the at least one venting valve (50, 82) is a rapid-venting valve.

8. Compressed air supply device according to any of Claims 1 to 7, wherein the opening pressure of the back-up valve (68, 80) is an operating pressure that is or can be adjusted by the electronic control device (12).

9. Compressed air supply device according to any of Claims 1 to 8, wherein the back-up valve (68, 80) is designed such that it closes pneumatically when the pressure in the supply line (30) has fallen to a pressure lower than a predetermined closing pressure.

## Revendications

1. Dispositif (10) d'alimentation en air comprimé de véhicules utilitaires, les dispositif (10) d'alimentation en air comprimé étant relié électriquement à un dispositif (12) électronique de commande ou pouvant l'être, le dispositif (10) d'alimentation en air comprimé comportant :
au moins une soupape (16, 18) de commande, qui peut être commandée par le dispositif (12) électronique de commande, la soupape (16, 18) de commande ayant au moins un raccord d'entrée, un raccord de purge et un raccord de sortie ;
un conduit (52) de commande, qui communique avec le raccord de sortie de la soupape (18) de commande, le conduit (52) de commande communiquant ou pouvant communiquer avec une entrée de commande d'un compresseur et/ou pour une régénération avec un filtre (26) d'air ;
un conduit (30) d'alimentation, par lequel de l'air comprimé est conduit au raccord d'entrée de la soupape (16, 18) de commande ou peut l'être ;
un conduit (46) de purge, qui communique avec le raccord de purge de la vanne (16) de commande et
une soupape (68, 80) de réarmement, une entrée de la soupape (68, 80) de réarmement communiquant avec le conduit (30) d'alimentation et une sortie de la soupape (68, 80) de réarmement communiquant ou pouvant communiquer avec le conduit (46) de purge ;
la soupape (68, 80) de réarmement étant constituée de manière à s'ouvrir pneumatiquement s'il règne dans le conduit (30) d'alimentation une pression qui correspond à une pression d'ouverture déterminée à l'avance ou qui la dépasse,
**caractérisé en ce qu'**il est prévu une soupape (50) de purge ayant une entrée (100), une sortie (102) et une évacuation (104) d'air, l'entrée (100) de la soupape (50) de purge communiquant ou pouvant communiquer avec la soupape (68, 80) de réarmement et, la sortie de la soupape (50) de purge communiquant ou pouvant communiquer avec le raccord de purge de la soupape (16, 18) de commande.

2. Dispositif d'alimentation en air comprimé suivant la revendication 1, dans lequel le dispositif (10) d'alimentation en air comprimé a une deuxième soupape (18) de commande pouvant être commandée par le dispositif (12) électronique de commande, un raccord de sortie de la deuxième soupape (18) de commande communiquant ou pouvant communiquer pour une régénération avec le filtre d'air.

3. Dispositif d'alimentation en air comprimé suivant la revendication 2, dans lequel, en outre, un raccord de purge de la deuxième soupape (18) de commande communique avec une sortie (102) d'une deuxième soupape (82) de purge.

4. Dispositif d'alimentation en air comprimé suivant l'une des revendications 1 à 3, dans lequel la sortie de la soupape (68, 80) de réarmement communique avec une entrée (100) d'une deuxième soupape (82) de purge.

5. Dispositif d'alimentation en air comprimé suivant l'une des revendications 1 à 4, dans lequel il est prévu, entre la sortie de la soupape (68) de réarmement et l'entrée (100) de la au moins une soupape (50) de purge, un conduit (70) de dérivation, qui ne communique pas avec une purge (48).

6. Dispositif d'alimentation en air comprimé suivant la revendication 5, dans lequel un étranglement (72) est prévu dans le conduit (70) de dérivation.

7. Dispositif d'alimentation en air comprimé suivant l'une des revendications 1 à 6, dans lequel la au moins une soupape (50, 82) de purge est une soupape de purge rapide.

8. Dispositif d'alimentation en air comprimé suivant l'une des revendications 1 à 7, dans lequel la pression d'ouverture de la soupape (68, 80) de réarmement est plus grande qu'une pression de fonctionnement réglable ou réglée par le dispositif (12) électronique de commande.

9. Dispositif d'alimentation en air comprimé suivant l'une des revendications 1 à 8, dans lequel la soupape (68, 80) de réarmement est constituée de manière à se fermer pneumatiquement si la pression dans le conduit (30) d'alimentation s'abaisse à une pression en dessous d'une pression de fermeture déterminée à l'avance.
